Europäisches Patentamt

European Patent Office

Office européen des brevets

(11) Veröffentlichungsnummer: **0 390 745 A2**

# EUROPÄISCHE PATENTANMELDUNG

(21) Anmeldenummer: **90810239.5**

(51) Int. Cl.⁵: **F16L 9/133**

(22) Anmeldetag: **26.03.90**

(30) Priorität: **31.03.89 CH 1178/89**

(43) Veröffentlichungstag der Anmeldung:
**03.10.90 Patentblatt 90/40**

(84) Benannte Vertragsstaaten:
**AT BE CH DE DK ES FR GB GR IT LI LU NL SE**

(71) Anmelder: **Geberit AG**
**Schachenstrasse 77**
**CH-8645 Jona(CH)**

(72) Erfinder: **Dolder, René**
**Eichwiesstrasse 29**
**CH-8645 Jona(CH)**
Erfinder: **Gübeli, Albert**
**Bühlstrasse 8**
**CH-8645 Jona(CH)**

(74) Vertreter: **Groner, Manfred et al**
**Patentanwalts-Bureau Isler AG**
**Walchestrasse 23**
**CH-8006 Zürich(CH)**

(54) **Mehrschichtiges Rohr, insbesondere Heisswasserrohr.**

(57) Das beispielsweise dreischichtige Rohr besitzt eine mittlere Schicht (1b), deren äussere Oberfläche durch mechanische Prägung bearbeitet ist. Die Prägung besteht aus Vertiefungen (5), die quer oder geneigt zur Längsrichtung des Rohres (1) verlaufen. Das Rohr eignet sich insbesondere als Heisswasserrohr. Die mittlere Schicht (1b) und die äussere Schicht (1a) können sich zueinander in Längsrichtung auch bei starken Temperaturänderungen nicht trennen.

Fig. 1

EP 0 390 745 A2

## Mehrschichtiges Rohr, insbesondere Heisswasserrohr

Die Erfindung betrifft ein mehrschichtiges Rohr nach dem Oberbegriff des unabhängigen Patentanspruchs 1.

Ein Rohr dieser Gattung ist beispielsweise aus der CH-A-584 863 bekannt. In dieser Schrift ist einleitend auch erwähnt, das mehrschichtige Rohr bekannt sind, die zum Durchleiten von heissem Wasser verwendet werden und die beispielsweise aus einem Innenmantel und einem Aussenmantel zusammengesetzt sind, die durch Kleben oder durch Einbringen einer zusätzlichen Kunststoffschicht miteinander verbunden werden. Weiter ist erwähnt, dass bei diesen mehrschichtigen Rohren abgesehen von der teuren Herstellung weiter zu bemängeln ist, dass deren Dauerhaftigkeit ungenügend ist und dass sich die Schichten voneinander lösen können. Der Vorschlag nach der genannten Schrift geht dahin, dass das Kunststoffrohr im Spritzverfahren hergestellt wird und die beiden Schichten innig verbunden werden. Dadurch wird erreicht, dass der Mantel unlösbar mit dem Innenrohr verschweisst ist, und sich die beiden Schichten auch unter dem Einfluss höherer Temperaturen und unter Wechsellast nicht voneinander trennen können.

Der Erfindung liegt die Aufgabe zugrunde, einen weiteren Weg aufzuzeigen, mit dem die oben genannten Schwierigkeiten vermieden werden können. Das Rohr soll die üblichen thermischen und mechanischen Anforderungen erfüllen, die üblicherweise an eine Heisswasserleitung insbesondere für Hausinstallationen gestellt werden. Die Aufgabe wird durch die Erfindung gemäss Anspruch 1 gelöst. Beim erfindungsgemässen Rohr ist die Aussenschicht mit der darunter liegenden Schicht weitgehend mechanisch verbunden und zwar insbesondere so, dass die beiden Schichten in Längsrichtung des Rohres unter dem Einfluss welchselnder Temperaturen nicht trennen können. Eine chemische und innige Verbindung zwischen den beiden Schichten ist nicht erforderlich, weshalb in der Materialwahl der mittleren Schicht ein wesentlich grösserer Spielraum besteht und diese Schicht nicht auf Kunststoff beschränkt ist.

Die Weiterbildung gemäss Anspruch 2 hat den Vorteil, dass das Rohr beispielsweise mit einer Schweissmuffe verschweissbar ist.

Durch die Weiterbildung gemäss Anspruch 3 wird vermieden, dass das Rohr infolge Längendehnung sich verbiegt und durchhängt. Die Verbindung zwischen der Aussenschicht und der darunter liegenden Schicht verhindert, dass sich die beiden Schichten auch bei starken Temperaturänderungen nicht voneinander lösen. Weitere vorteilhafte Weiterbildungen ergeben sich aus den übrigen abhängigen Ansprüchen. Ein vorteilhaftes Verfahren zur Herstellung des erfindungsgemässen Rohres ergibt sich aus Anspruch 7.

Ein Ausführungsbeispiel der Erfindung wird nachfolgend anhand der Zeichnungen näher erläutert. Es zeigen:

Fig. 1 eine perspektivische Ansicht eines erfindungsgemässen Rohres, wobei äussere Schichten teilweise abgezogen sind,

Fig. 2a schematisch und teilweise im Schnitt die Herstellung von Vertiefungen in der äusseren Oberfläche einer Rohrschicht,

Fig. 2b schematisch ein Teil der Einrichtung zur Bearbeitung einer Rohrschicht, und

Fig. 3 eine Teilansicht der mittleren Schicht des Rohres.

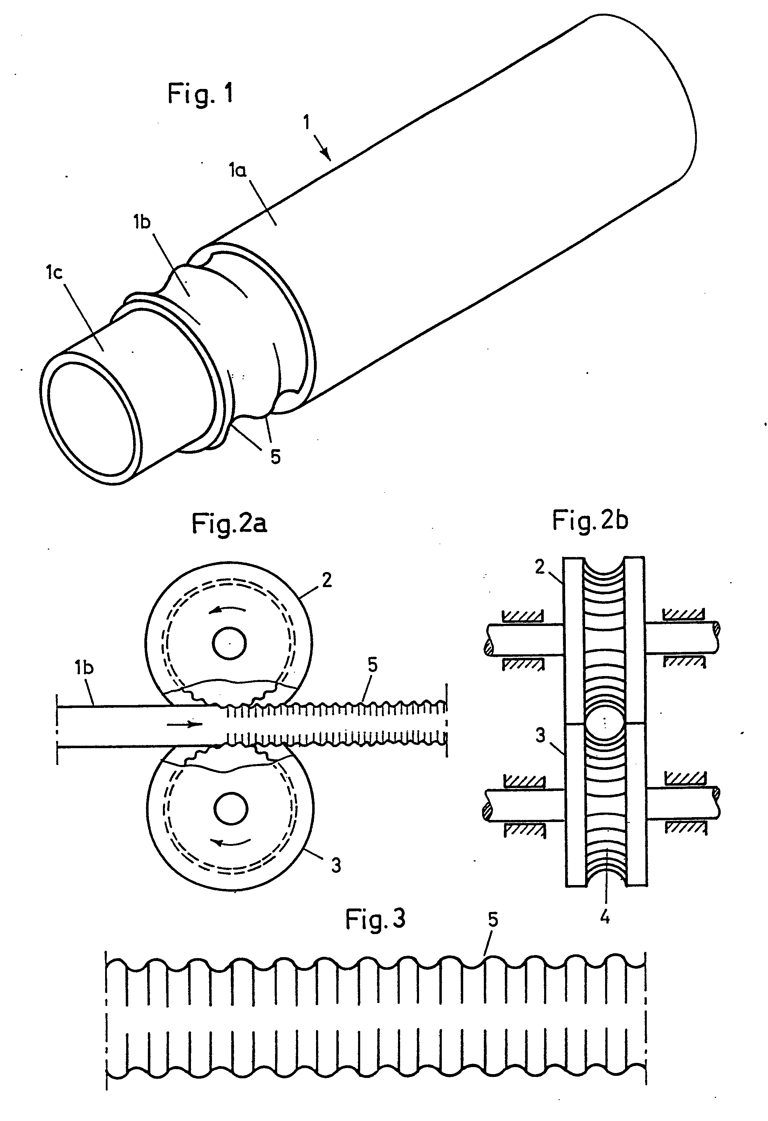

Das in Fig. 1 gezeigte Rohr weist eine äussere Schicht 1a aus einem verschweissbaren Kunststoff, beispielsweise aus Polyaethylen oder Polypropylen, eine mittlere Schicht 1b aus Kunststoff oder einem anderen Werkstoff mit vergleichsweise geringem Wärmedehnungskoeffizient sowie eine innere Schicht 1c aus extrudiertem Kunststoff auf. Das Rohr kann jedoch aus mehr als drei Schichten bestehen.

Die äussere Oberfläche der Schicht 1b weist eine Vielzahl über die ganze Länge verteilte Vertiefungen 5 auf, die quer zur Längsrichtung des Rohres 1 verlaufen. Die Vertiefungen 5 können auch gekreuzt oder schräg zur Rohrlängsrichtung verlaufen. Das äussere Rohr 1a hat auf seiner Innenfläche den Vertiefungen 1b komplementäre und hier nicht gezeigte Vorsprünge. Durch diese mechanische Verzahnung der beiden Schichten 1a und 1b wird vermieden, dass bei Temperaturänderungen sich die beiden Schichten auch auf Dauer nicht trennen können. Dies auch dann wenn die Wärmedehnungskoeffizienten der Schichten 1a und 1b stark unterschiedlich sind.

Die Rillen 5 können wie in Fig. 2a und 2b gezeigt mit zwei Prägewalzen 2 und 3 hergestellt werden. Das die Schichten 1c und 1b aufweisende Rohr wird zwischen den gegenläufig drehenden Rollen 2 und 3 hindurchgestossen, wobei sich in der Oberfläche der Schicht 1b Vertiefung entsprechend den Erhebungen 4 auf der inneren Fläche der Rollen 2 und 3 bilden.

Wie in einem geeignetem Herstellungsverfahren wird zuerst die Schicht 1c als Rohr aus Kunststoff durch Extrusion hergestellt. Der Durchmesser dieses Rohres kann beispielsweise 2 cm und die Stärke der Wandung beispielsweise etwa 1 mm betragen. Auf das extrudierte Rohr wird anschliessend die Schicht 1b aufgetragen.

Hierauf wird nun die äussere Oberfläche der Schicht 1b beispielsweise mit der Vorrichtung nach Fig. 2b bearbeitet. Abschliessend wird die äusserste Schicht 1a aufgebracht. Diese äusserste Schicht 1a weist vorzugsweise eine geringere Stärke auf als die übrigen Schichten 1b und 1c. Die Tiefe der Rillen 5 richtet sich nach der Stärke der äusseren Schicht 1a.

**Ansprüche**

1. Mehrschichtiges Rohr, insbesondere Heisswasserrohr, wobei wenigstens die Aussenschicht (1a) aus Kunststoff hergestellt und mit der darunter liegenden Schicht (1b) verbunden ist, dadurch gekennzeichnet, dass in die äussere Oberfläche der darunter liegenden Schicht (1b) quer oder geneigt zur Längsrichtung des Rohres (1) verlaufende Vertiefungen (5) eingearbeitet sind.

2. Rohr nach Anspruch 1, dadurch gekennzeichnet, dass die Aussenschicht (1a) aus einem schweissbaren, thermoplastischen Kunststoff hergestellt ist und dass die innerste Schicht (1c) aus einem chemisch sehr resistenten Kunststoff, insbesondere aus Tetrafloraethylen hergestellt ist.

3. Rohr nach Anspruch 1 oder 2, dadurch gekennzeichnet, dass die darunter liegende Schicht (1b) oder eine mittlere Schicht aus einem Werkstoff hergestellt ist, der einen wesentlich kleineren Wärmedehnungskoeffizient aufweist als Polyaethylen oder Polypropylen.

4. Rohr nach einem der Ansprüche 1 bis 3, dadurch gekennzeichnet, dass das Rohr dreischichtig ist und die innerste Schicht (1c) und die äussere Schicht (1a) aus Kunststoff hergestellt sind.

5. Rohr nach Anspruch 4, dadurch gekennzeichnet, dass die innerste Schicht (1c) und die äusserste Schicht (1a) aus Kunststoff hergestellt sind und dass die mittlere Schicht (1b) aus einem Werkstoff hergestellt ist, der einen wesentlich kleineren Wärmedehnungskoeffizient aufweist als die beiden anderen Schichten (1a,1c).

6. Rohr nach einem der Ansprüche 1 bis 5, dadurch gekennzeichnet, dass die Vertiefungen (5) in der äusseren Oberfläche der darunter liegenden bzw. mittleren Schicht (1b) durch Prägung hergestellt sind.

7. Verfahren zur Herstellung eines Rohres gemäss Anspruch 1, gekennzeichnet durch folgende Verfahrensschritte:

a) Herstellung eines Rohres (1c) aus Kunststoff durch Extrusion,

b) Aufbringen einer Schicht (1b) auf die äussere Oberfläche des Rohres (1c),

c) mechanische Bearbeitung der äusseren Oberfläche der aufgebrachten Schicht (1b) und insbesondere Verformung dieser Oberfläche zur Bildung von quer oder geneigt zur Längsrichtung des Rohres verlaufenden Vertiefungen (5),

d) Aufbringen einer Schicht (1a) aus Kunststoff auf die äussere Oberfläche der bearbeiteten Schicht (1b).

EP 0 390 745 A2

Fig. 1

Fig.2a

Fig.2b

Fig.3